# EUROPEAN PATENT APPLICATION

(11) **EP 3 020 563 A1**
(43) Date of publication of application: **18.05.2016**
(21) Application number: 14823113.7
(22) Date of filing: 06.06.2014
(51) Int. Cl.: B41J 29/46, B41J 2/01, B41J 2/21

(54) **TEST CHART-FORMING METHOD, DEVICE AND PROGRAM, TEST CHART, AND IMAGE CORRECTION METHOD**

(30) Priority: 12.07.2013 JP 2013147040
(71) Applicant: Fujifilm Corporation, Minato-ku Tokyo 106-8620 (JP)
(72) Inventor: YAMAGISHI Hideki, Tokyo 107-0052 (JP)
(74) Representative: Klunker . Schmitt-Nilson . Hirsch
(86) International application number: PCT/JP2014/065090
(87) International publication number: WO 2015/005038

(57) **Abstract**

The present invention relates to a test chart-forming method, device and program as well as a test chart and an image correction method. By acquiring the image data corresponding to an image (72) and performing an evaluation prior to the regular output of the image (72), quantitative evaluation of robustness with respect to streaking and/or the intensity of streaking is performed. On the basis of the results of the quantitative evaluation, at least one specified site (76) of low robustness and/or specified site (76) of high intensity is extracted from the image region (70). On the basis of the color and position of each extracted specified site (76), the color scheme and layout of at least one test image (20) on a test chart (22) is determined.

## Description

### Technical Field

The present invention relates to a test chart forming method, along with a device and a program for forming a test chart for correcting striped irregularities caused in an image area along a direction perpendicular to the direction in which a recording head extends, at a time that an image is formed according to a single pass process using the recording head. The present invention further relates to a test chart and an image correction method.

### Background Art

In recent years, using image forming apparatus based on ink jet recording processes, the printing of large color prints of high quality at high speeds has been realized. One of such recording processes that has attracted particular interest is a single pass process using a recording head (hereinafter referred to as a "line head"), for example. This is because such a single pass process makes it possible to form an image by moving the recording medium or the line head only once along a feed direction transverse to the direction referred to above. The single pass process is thus capable of meeting all of various specifications (higher speed, lower electric power, higher image quality) required in a variety of applications including prints, signs, and displays.

The single pass process tends to produce, in the image, density irregularities (hereinafter referred to as "striped irregularities") which extend in the feed direction, due to variations in the manner in which ink jets are ejected from nozzles of the line head. There have been proposed various image correction technologies for reducing striped irregularities in images by forming a test chart on a recording medium and analyzing a microscopic color distribution of the color patches of the test chart.

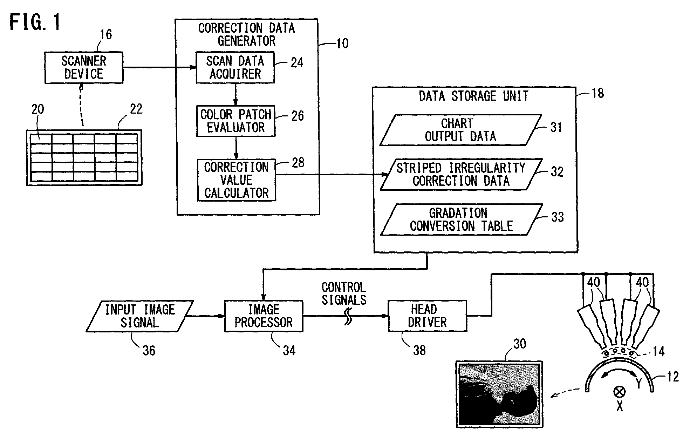

Japanese Laid-Open Patent Publication No. 2012-066457 proposes a method of forming test charts in which layout sequences of two or more color patches differ from each other. The proposed method is capable of eliminating adverse effects such as measurement errors or the like caused by the layout of the color patches (refer to the abstract, FIG. 1, etc., of the document).

### Summary of Invention

The correction method disclosed in Japanese Laid-Open Patent Publication No. 2012-066457 has a tendency in which it is more effective to reduce striped irregularities for colors closer to the color of either one of the color patches, whereas it is less effective to correct striped irregularities for colors that are more spaced therefrom. In other words, depending on the color combination of an image that is formed, the image may contain an image area in which striped irregularities are still visible even after being corrected. Consequently, much remains to be improved with respect to the relationship between the color combination of an image and the effectiveness of correction of striped irregularities.

The present invention has been made in order to solve the above problems. An object of the present invention is to provide a test chart forming method, a device and a program, a test chart, and an image correction method, which are capable of maximizing the effectiveness of correction of striped irregularities that are peculiar to a single pass process.

According to the present invention, there is provided a method of forming a test chart for correcting a striped irregularity in an image area, which is caused in a direction perpendicular to a direction in which a recording head extends, in a case where an image is to be formed using the recording head according to a single-pass process, the method causing a test chart forming apparatus to perform an acquiring step of acquiring image data corresponding to the image prior to final outputting of the image, an evaluating step of carrying out an evaluation process on the acquired image data for quantitatively evaluating at least one of robustness against the striped irregularity and intensity of the striped irregularity, an extracting step of extracting at least one of a particular region where the robustness is low and a particular region where the intensity is high from the image area based on the quantitatively evaluated result, and a determining step of determining a color combination and layout of one or more test images on the test chart based on a color and position of each extracted particular region.

Since the color combination and layout of one or more test images on the test chart are determined on the basis of the color and position of at least one of a particular region where robustness against striped irregularity is low and a particular region where intensity of the striped irregularity is high, it is possible for a test chart to be formed, in which the effectiveness in reducing striped irregularity in the particular region in the image area is maximized. Consequently, the effectiveness of correcting striped irregularity, which is peculiar to a single pass process, is maximized regardless of the color combination of the image.

Preferably, the extracting step divides the image area into a grid pattern along the direction in which the recording head extends and the direction perpendicular thereto, and extracts the particular region in which defined subareas serve as units.

Preferably, the determining step groups the subareas into groups along at least one of the direction in which the recording head extends and the direction perpendicular thereto, and determines the color combination and layout of the test image for each of the groups.

Preferably, the determining step determines one or more range sets, which are sets of color ranges to be corrected and positional ranges along the direction in which the recording head extends, based on the color and position of each extracted particular region, and determines the color combination and layout of one or more color patches as the test image so as to fall within each of the range sets.

Preferably, on condition that the extracting step extracts two or more subareas belonging to one of the groups as each particular region, then the determining step determines the color ranges including representative colors in each particular region, and determines the color combination and layout of each color patch.

Preferably, the determining step clips each particular region from the image area and determines the layout of the one or more particular regions as the test image.

Preferably, the acquiring step acquires an image signal to be supplied for final outputting of the image as the image data, and the evaluating step evaluates the robustness based on at least one of a color distribution on the image represented by the image signal, a texture distribution on the image represented by the image signal, and head information concerning the recording state of the recording head.

Preferably, the acquiring step acquires an image signal to be supplied for final outputting of the image as the image data, and the evaluating step generates a pseudo-image signal representing the image to which the striped irregularity is applied in a pseudo fashion from the acquired image signal, using head information concerning the recording state of the recording head, and carries out the evaluation process on the pseudo-image signal in order to evaluate at least one of the robustness and the intensity.

Preferably, the evaluating step determines a target area to be quantitatively evaluated from the image area based on at least the head information, and evaluates only the target area.

Preferably, the acquiring step acquires scan data produced by reading, with a scanner device, an output sample formed by trial outputting of the image signal to be supplied for final outputting thereof as the image data, and the evaluating step performs the evaluation process on the scan data in order to evaluate the intensity.

Preferably, the method further causes the test chart forming apparatus to perform a setting step of setting an allowable range for at least one of the robustness and the intensity, wherein the extracting step extracts a particular region that exceeds the allowable range which has been set.

Preferably, the evaluating step performs the evaluation process based on human standard visual response characteristics in order to evaluate at least one of the robustness and the intensity.

According to the present invention, there is provided an image correcting method causing the test chart forming apparatus to further perform an output step of forming the test chart using any of the methods described above, and outputting the test chart on a recording medium, and a generating step of generating striped irregularity correction data for correcting the striped irregularity that is produced in a case where the image is formed, based on a color distribution of the one or more test images output on the recording medium.

Preferably, the acquiring step, the evaluating step, and the extracting step are performed, and it is determined whether or not the output step needs to be performed depending on the extracted result of the particular region.

A test chart according to the present invention is an image-formed object, which is formed using any of the above methods.

According to the present invention, there also is provided an apparatus for forming a test chart for correcting a striped irregularity in an image area, which is caused in a direction perpendicular to the direction in which a recording head extends, in a case where an image is to be formed using the recording head according to a single-pass process, comprising an image data acquirer configured to acquire image data corresponding to the image prior to final outputting of the image, a striped irregularity evaluator configured to carry out an evaluation process on the image data acquired by the image data acquirer for quantitatively evaluating at least one of robustness against the striped irregularity and intensity of the striped irregularity, a particular region extractor configured to extract at least one of a particular region where the robustness is low and a particular region where the intensity is high from the image area based on the quantitatively evaluated result from the striped irregularity evaluator, and a test image determiner configured to determine a color combination and layout of one or more test images on the test chart based on a color and position of each particular region extracted by the particular region extractor.

According to the present invention, there is further provided a test chart forming program for forming a test chart for correcting a striped irregularity in an image area, which are caused in a direction perpendicular to a direction in which a recording head extends, in a case where an image is to be formed using the recording head according to a single-pass process, the program causing a test chart forming apparatus to perform an acquiring step of acquiring image data corresponding to the image prior to final outputting of the image, an evaluating step of carrying out an evaluation process on the acquired image data for quantitatively evaluating at least one of robustness against the striped irregularity and intensity of the striped irregularity, an extracting step of extracting at least one of a particular region where the robustness is low and a particular region where the intensity is high from the image area based on the quantitatively evaluated result, and a determining step of determining a color combination and layout of one or more test images on the test chart based on a color and position of each extracted particular region.

A non-transitory storage medium according to the present invention is computer-readable and stores the above program.

With the test chart forming method, the apparatus, the test chart, and the image correcting method according to the present invention, since the color combination and layout of one or more test images on the test chart are determined on the basis of the color and position of at least one of a particular region where robustness against striped irregularity is low and a particular region where intensity of the striped irregularity is high, it is possible for a test chart to be formed, in which effectiveness in reducing striped irregularity in the particular region in the image area is maximized. Consequently, the effectiveness of correcting striped irregularity, which is peculiar to a single pass process, is maximized regardless of the color combination of the image.

### Brief Description of Drawings

FIG. 1 is a schematic block diagram of a primary arrangement for realizing the correction of striped irregularities;
FIG. 2 is a plan view showing a structural example of a recording head shown in FIG. 1;
FIG. 3 is a cross-sectional view taken along line III-III of FIG. 2;
FIG. 4 is a schematic block diagram of a major arrangement for forming a test chart according to a first embodiment;
FIG. 5 is a flowchart of an operation sequence of a chart output data generator shown in FIGS. 4 and 23;
FIG. 6 is a schematic front elevational view of a print shown in FIGS. 4 and 23;
FIG. 7 is a schematic view illustrating a positional relationship between the recording head shown in FIG. 2 and an image area shown in FIG. 6;
FIG. 8 is a functional block diagram of a striped irregularity evaluator shown in FIGS. 4 and 23;
FIG. 9 is a schematic view illustrating a process of extracting a particular region;
FIG. 10 is a schematic diagram illustrating a process of determining a reference color for a color patch;
FIG. 11 is a schematic diagram illustrating a process of determining a color combination of color patches;
FIG. 12 is a schematic front elevational view of a test chart shown in FIG. 1;
FIGS. 13A and 13B are schematic diagrams illustrating ranges for correcting striped irregularities;
FIG. 14 is a schematic front elevational view of a print in another format;
FIG. 15 is a sectional side elevational view showing the arrangement of an image forming apparatus;
FIG. 16 is an electric block diagram showing a system arrangement of an image forming apparatus according to the first embodiment;
FIGS. 17A and 17B are plan views showing other structural examples of the recording head shown in FIG. 2;
FIG. 18 is a schematic block diagram of a primary arrangement for forming a test chart according to a second embodiment;
FIG. 19 is a flowchart of an operation sequence of a chart output data generator shown in FIG. 18;
FIG. 20A is a graph showing various values of an ordinary table and a customized table;
FIG. 20B is a graph showing various values of a composite table;
FIG. 21 is an electric block diagram showing a system arrangement of an image forming apparatus according to the second embodiment;
FIG. 22 is a schematic diagram of an image forming system incorporating the image forming apparatus shown in FIGS. 15 and 21;
FIG. 23 is a diagram showing a modification of the schematic block diagram shown in FIG. 4;
FIG. 24 is a diagram showing a modification of the schematic block diagram shown in FIG. 8;
FIG. 25 is a diagram showing a modification of the block diagram shown in FIG. 16; and
FIG. 26 is a diagram showing a modification of the schematic diagram shown in FIG. 22.

### Description of Embodiments

Test chart generating methods and image correction methods according to preferred embodiments of the present invention in relation to an apparatus for carrying out such methods, programs, test charts, and image forming apparatus will be described in detail below with reference to the accompanying drawings. In the present description, a process of forming an image may also be referred to as "printing" or "character printing".

### [Schematic Block Diagram Common to Embodiments (Correction of Striped Irregularities)]

FIG. 1 is a schematic block diagram of a primary arrangement for realizing the correction of striped irregularities. The phrase "correction of striped irregularities" signifies an image processing routine for correcting striped density irregularities (hereinafter referred to as "striped irregularities") that are produced in a formed image.

A correction data generator 10 generates data for correcting striped irregularities (hereinafter referred to as "striped irregularity correction data 32") in a case where liquid droplets 14 are ejected onto a sheet 12 of paper (recording medium) to form an image thereon. The correction data generator 10 is capable of receiving various data from a scanner device 16, as well as sending various data to a data storage unit 18.

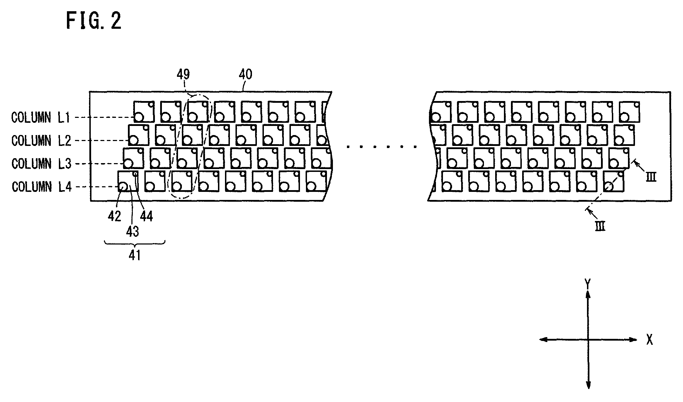

The correction data generator 10 includes a scan data acquirer 24 for acquiring electronic data (hereinafter referred to as "scan data") generated by reading a test chart 22, which comprises at least one color patch 20 (test image), a color patch evaluator 26 for evaluating a microscopic color distribution of each color patch 20, and a correction value calculator 28 for calculating correction values for correcting ejection conditions under which liquid droplets 14 are ejected from nozzles 42 (see FIG. 2).

The scanner device 16 generates scan data by optically reading an image on an image-formed object (including the test chart 22 and a print 30). The scanner device 16 may be a flatbed scanner for reading reflective documents, or a film scanner for reading transmissive documents.

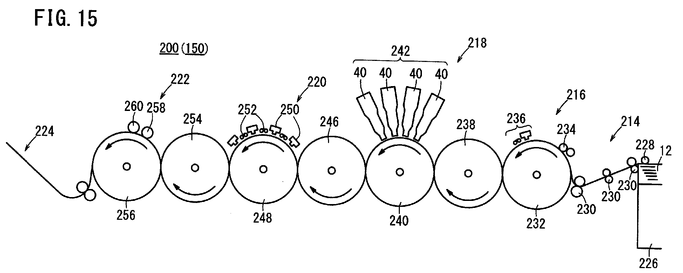

The scanner device 16 may be integrated with an image forming apparatus 200 (see FIG. 15) that forms the test chart 22, and may comprise a line sensor, an image sensor, or the like, for example. In this case, the scanner device 16 optically reads each color patch 20 while being moved relatively to the test chart 22.

The data storage unit 18 stores various data required to carry out the present correction method. In FIG. 1, the data storage unit 18 stores chart output data 31, striped irregularity correction data 32, and a gradation conversion table 33.

An image processor 34 generates control signals (e.g., dot layout data for respective ink colors) to be used for forming an image, on the basis of an image signal that is input (hereinafter referred to as an "input image signal 36"). The image processor 34 performs various image processing routines including a process of converting the resolution of an image, a process of converting the attributes of a color plate, a process of converting a continuous-tone image signal into a halftone signal representing ON and OFF instances of dots, and a process of assigning dot sizes to ON pixels.

A head driver 38 is a drive circuit for controlling at least one of the recording heads 40 to eject liquid droplets 14 at an appropriate timing on the basis of the generated control signals. FIG. 1 shows a single pass process in which the recording heads 40, each of which serves as a line head extending in the direction of the arrow X, are fixed, and the sheet 12 is fed one stroke along the direction of the arrow Y, which is perpendicular to the direction of the arrow X. Hereinafter, the direction of the arrow X may also be referred to as a "direction of extension", whereas the direction of the arrow Y may also be referred to as a "feed direction".

### [Arrangement of Recording Head 40]

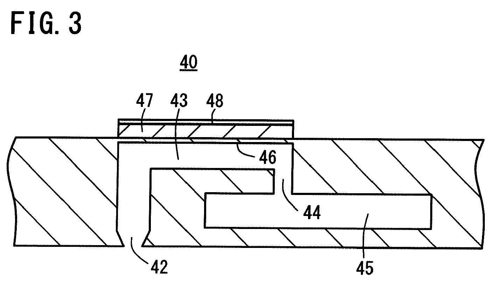

FIG. 2 is a plan view showing a structural example of one of the recording heads 40 shown in FIG. 1. FIG. 3 is a cross-sectional view taken along line III-III of FIG. 2.

As shown in FIG. 2, the recording head 40 includes a plurality of ink chamber units 41 (recording elements) arranged in a staggered matrix. Each of the ink chamber units 41 has a nozzle 42, a pressure chamber 43, and a supply port 44. The pressure chamber 43, which is of a generally square shape as viewed in plan, includes an outlet port defined in one of diagonally opposite corners thereof and which extends to the nozzle 42, and an inlet port (supply port 44) that extends from a common channel 45.

As shown in FIG. 3, the pressure chambers 43 are held in fluid communication, respectively, with the common channel 45 through the supply ports 44. The common channel 45 is held in fluid communication with a non-illustrated ink tank as a supply source of an ink (color material). Ink that is supplied from the ink tank is distributed and supplied through the common channel 45 to the pressure chambers 43.

One wall (upper wall in FIG. 3) of the pressure chamber 43 comprises a pressurization plate 46, which doubles as a common electrode. To an upper surface of the pressurization plate 46, there is joined a piezoelectric element 47, which serves as an actuator for applying a pressure in order to deform the pressurization plate 46. An individual electrode 48 is disposed on an upper surface of the piezoelectric element 47.

In a case where a drive voltage is applied between the two electrodes, i.e., the pressurization plate 46 that doubles as the common electrode and the individual electrode 48, the piezoelectric element 47, which is sandwiched between the two electrodes, becomes deformed. The physical deformation changes the volume of the pressure chamber 43, thereby pushing the ink out of the nozzle 42 and ejecting the ink as a liquid droplet 14 (see FIG. 1). After the liquid droplet 14 has been ejected, the pressure chamber 43 is filled with ink again, which flows in from the common channel 45 through the supply port 44 in a case where the deformed piezoelectric element 47 is restored to its original state.

Referring back to FIG. 2, the layout of the nozzles 42 will be described below. In FIG. 2, the recording head 40 has a longitudinal direction defined by the direction of the arrow X, and a transverse direction defined by the direction of the arrow Y. The direction in which the sheet 12 is fed (see FIG. 1) extends perpendicularly to the direction of the arrow X and parallel to the direction of the arrow Y.

The nozzles 42 are arranged in successive columns L1 through L4, which extend parallel to the direction of the arrow X. The nozzles 42 in the column L1 are spaced at equal intervals, each of which represents four unit lengths, along the direction of the arrow X. Similarly, the nozzles 42 in the columns L2 through L4 are spaced at equal intervals, each of which represents four unit lengths, along the direction of the arrow X. The direction of the arrow X may hereinafter also be referred to as an "array direction" of the nozzles 42 (the ink chamber units 41).

The nozzles 42 in the column L2 are positionally shifted one unit length from the nozzles 42 in the column L1 to the left opposite to the direction of the arrow X. The nozzles 42 in the column L3 are positionally shifted one unit length from the nozzles 42 in the column L2 to the left opposite to the direction of the arrow X. The nozzles 42 in the column L4 are positionally shifted one unit length from the nozzles 42 in the column L3 to the left opposite to the direction of the arrow X. Therefore, the essential spaced intervals (projected nozzle pitches) between the nozzles 42, as projected onto a plane so as to be arrayed along the longitudinal direction of the recording head 40, are of increased density.

### [First Embodiment]

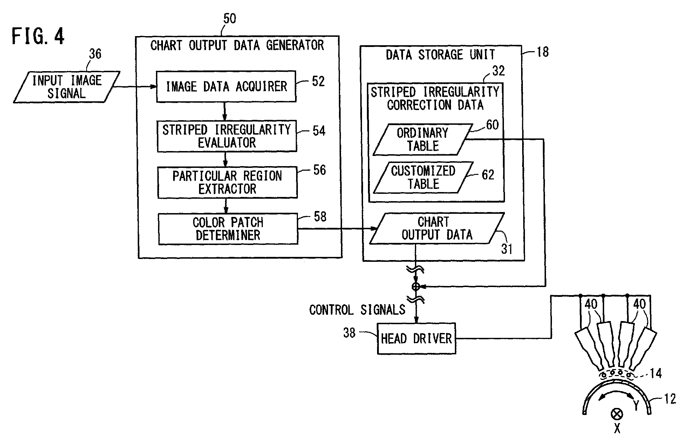

A test chart generating method and an image correction method according to a first embodiment will be described below with reference to FIGS. 4 through 16.

### <Schematic Block Diagram (Formation of Test Chart 22)>

FIG. 4 is a schematic block diagram of a major arrangement for forming the test chart 22 according to the first embodiment.

A chart output data generator 50 generates chart output data 31 for forming the test chart 22 shown in FIG. 1, on the basis of the input image signal 36 that is supplied to form the print 30. The chart output data generator 50 includes an image data acquirer 52, a striped irregularity evaluator 54, a particular region extractor 56, and a color patch determiner 58 (test image determiner).

The chart output data generator 50 is capable of receiving various data from and sending various data to the data storage unit 18. The data storage unit 18 stores not only the chart output data 31 (see FIG. 1) but also the striped irregularity correction data 32 (an ordinary table 60 and a customized table 62). The ordinary table 60 and the customized table 62 represent table data made up of correction values for correcting the controlled quantity of liquid droplets ejected from each of the nozzles 42, for example.

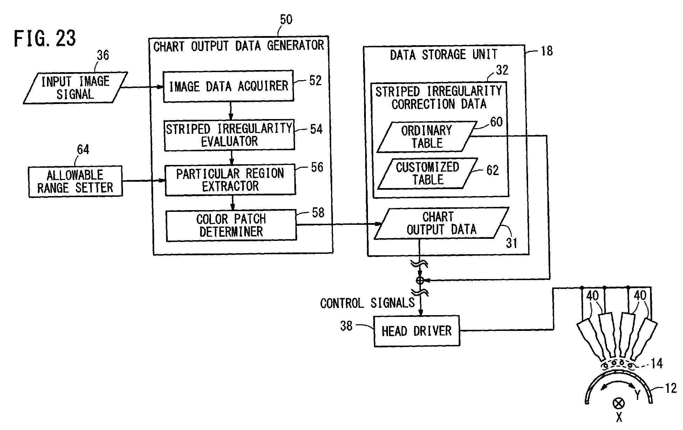

As shown in FIG. 23, an allowable range setting unit 64 is further provided in addition to the arrangement shown in FIG. 4. The allowable range setting unit 64 supplies set data in relation to an allowable range of striped irregularities to the chart output data generator 50 (more specifically, the particular region extractor 56).

### <Operations of Chart Output Data Generator 50>

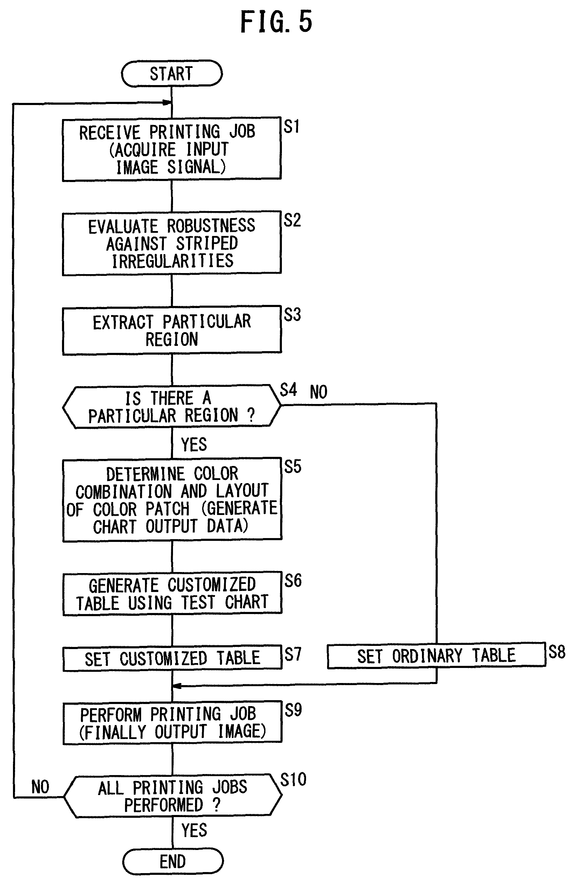

Operations primarily of the chart output data generator 50 (see FIGS. 4 and 23) will be described in detail below with reference to the flowchart shown in FIG. 5 and other figures.

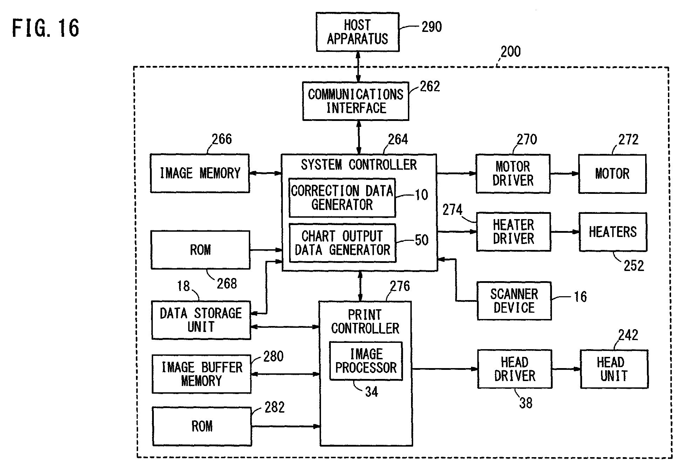

In step S1, a host apparatus 290 (see FIG. 16, etc.) receives a printing job and supplies various items of information, which are used to form the print 30, to the image forming apparatus 200 (see FIG. 16). At this time, the chart output data generator 50 (the image data acquirer 52) acquires an input image signal 36 corresponding to an image 72.

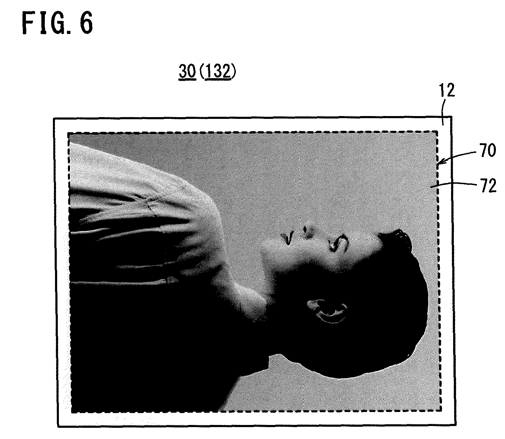

FIG. 6 is a schematic front elevational view of the print 30 shown in FIG. 1. The image 72, which is made up of four color plates in Y (yellow), M (magenta), C (cyan), and K (black) colors, is formed in an image area 70 on the sheet 12. In FIG. 6, the image 72 represents a natural picture in which an upper half body portion of a woman is drawn substantially in the center, and is rendered as a monochromatic image for illustrative purposes.

The image data acquirer 52 may convert the pixel values of the input image signal 36 into quantities that are highly correlative (preferably linear) to the amount of light that is reflected by or transmitted through the image. For example, the quantities may be RGB values, tristimulus values (XYZ), optical reflectances on condition that the image is a reflective image, or optical transmittances on condition that the image is a transmissive image.

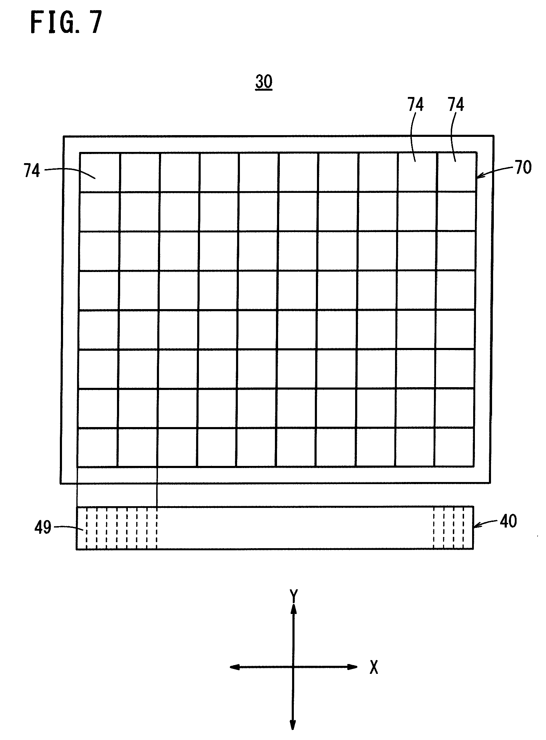

In step S2, the striped irregularity evaluator 54 performs an evaluation process on the input image signal 36 acquired in step S1 in order to quantitatively evaluate at least one of robustness against striped irregularities and intensity of the striped irregularities. A specific example of the evaluation process will be described below with reference to FIGS. 7 through 9.

FIG. 7 is a schematic view illustrating a positional relationship between the recording head 40 shown in FIG. 2 and the image area 70 shown in FIG. 6. The length of a side of the image area 70 along the direction of the arrow X coincides substantially with the length of the recording head 40. A nozzle column 49 corresponds to a group of four nozzles 42 as a unit, which are arranged along the direction of the arrow Y.

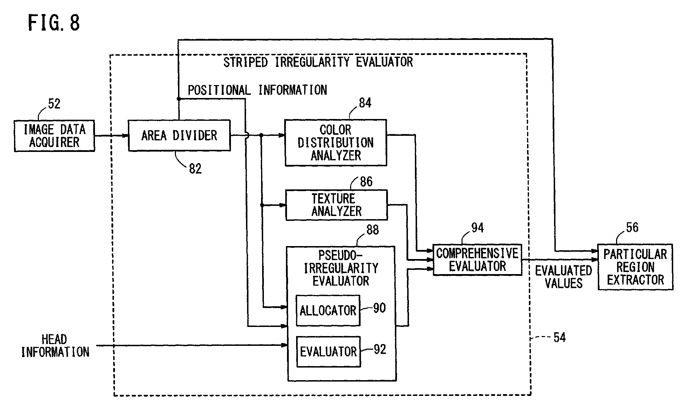

FIG. 8 is a functional block diagram of the striped irregularity evaluator 54 shown in FIGS. 4 and 23. The striped irregularity evaluator 54 comprises an area divider 82, a color distribution analyzer 84, a texture analyzer 86, a pseudo-irregularity evaluator 88 (including an allocator 90 and an evaluator 92), and a comprehensive evaluator 94.

The area divider 82 acquires image data from the image data acquirer 52, and divides the image area 70 represented by the image data into a plurality of subareas 74. Thereafter, the area divider 82 supplies partial images corresponding to the subareas 74 successively to the color distribution analyzer 84, the texture analyzer 86, and the pseudo-irregularity evaluator 88. Concurrently, the area divider 82 holds the corresponding relationship between two-dimensional positions of the subareas 74 and the positions of the nozzles 42 in the array direction as positional information of the subareas 74.

In the example shown in FIG. 7, the image area 70 is divided into a grid pattern along the direction of the arrow X and the direction of the arrow Y, thereby defining the subareas 74. In FIG. 7, the image area 70, which is of a rectangular shape, is divided into equal subareas 74 arranged in eight rows and ten columns. In other words, eighty subareas 74 having identical shapes are defined in the image area 70.

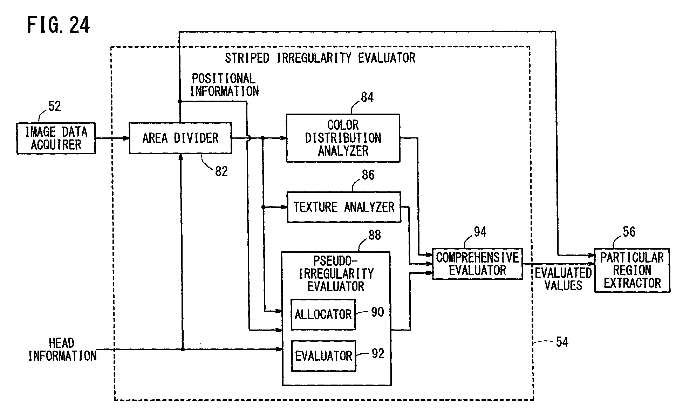

As shown in FIG. 24, the area divider 82 may determine target areas (e.g., subareas 74) to be quantitatively evaluated from the image area 70 on the basis of at least the head information, and may supply only those target areas. The term "head information" refers to information concerning the recording state of the recording head 40. On condition the area divider 82 determines, with high probability, target areas that include regions in which striped irregularities will be produced, then the calculating time required to perform the evaluation process can be shortened significantly.

The color distribution analyzer 84 analyzes the color distribution of a partial image in order to quantize robustness against striped irregularities. The color distribution analyzer 84 may, for example, obtain a quantized result for each pixel by performing an input/output conversion process (e.g., an LUT, a function, or a learning model) using color values as an input and using robustness as an output. A line segment detecting process or any of various known processes, as disclosed in Japanese Laid-Open Patent Publication No. 2005-165387, Japanese Laid-Open Patent Publication No. 2008-080625, and Japanese Laid-Open Patent Publication No. 2006-165387, etc., may be used as a process for detecting striped irregularities. VDP (Visible Differences Predictor) or any of various known processes, as disclosed in Japanese Laid-Open Patent Publication No. 2007-172512 and Japanese Laid-Open Patent Publication No. 2007-034648, etc., may be used as an evaluation index for the intensity of the striped irregularities.

For example, a feature in which robustness is higher for lighter colors with relatively small dot recording ratios, and robustness is lower for deeper colors with relatively large dot recording ratios may be taken into consideration. In addition to or apart from this feature, a feature in which robustness is higher for lower saturation, and robustness is lower for higher saturation may be taken into consideration. In addition to or apart from this feature, a feature in which robustness is higher for higher brightness, and robustness is lower for lower brightness may be taken into consideration. Furthermore, a feature in which robustness is lower for colors closer to memory colors, including skin colors, blue sky colors, green plant colors, and flower colors, may be taken into consideration.

The texture analyzer 86 analyzes the texture distribution of a partial image in order to quantize robustness against striped irregularities. The color distribution analyzer 84 may, for example, obtain a quantized result for each pixel by performing an input/output conversion process (e.g., an LUT, a function, or a learning model) using the partial image as an input and using robustness as an output. For example, it may take into consideration a tendency for robustness to be higher for more complex textures, and for robustness to be lower for flatter textures.

The pseudo-irregularity evaluator 88 evaluates an image with pseudo-striped irregularities applied thereto in order to quantize at least one of robustness against striped irregularities and intensity of the striped irregularities. More specifically, the pseudo-irregularity evaluator 88 includes an allocator 90 for generating an image signal representing an image with pseudo-striped irregularities applied thereto (hereinafter referred to as a "pseudo-image signal") and an evaluator 92 for applying a particular evaluation process (including a known detecting procedure and a known quantizing procedure) to the pseudo-image signal in order to quantitatively evaluate at least one of intensity and robustness.

The allocator 90 generates a pseudo-image signal from partial images (input image signal 36) on the basis of the aforementioned head information and position information of the subareas 74. The position at which striped irregularities are to be allocated and the intensity of the striped irregularities can be determined, for example, in view of various factors including the position from the nearest nozzle 42 in the direction of the arrow Y, a positional relationship between the nozzles 42 and the accuracy with which the nozzles 42 are machined (deviations of the positions where the liquid droplets land on a sheet of paper), and the dot recording ratios.

The evaluator 92 detects a striped image area according to any of various image detecting processes performed on the pseudo-image signal generated by the allocator 90, and quantizes the intensity of the detected striped image area according to any of various quantizing procedures. On condition that the evaluator 92 detects a plurality of image areas within one subarea 74, the evaluator 92 may determine a typical value thereof according to a statistical procedure including an averaging process.

The pseudo-irregularity evaluator 88 may calculate an evaluated value with respect to the intensity of the striped irregularities by generating and evaluating one image to which typical striped irregularities have been allocated. In addition to or apart from this feature, the pseudo-irregularity evaluator 88 may generate and evaluate a plurality of images to which random striped irregularities have been allocated, and determine a statistical value thereof in order to calculate an evaluated value with respect to robustness.

In order to increase the correlation between the quantized result and visibility in making various evaluations with respect to striped irregularities, the texture analyzer 86 or the pseudo-irregularity evaluator 88 may perform an analysis or evaluation in view of human standard visual response characteristics (a so-called VTF: Visual Transfer Function). The VTF may be a Dooley-Shaw function, other functions, or any of various visual characteristics derived from a mathematical model, experimental data, or the like. The type of the VTF used in carrying out such calculations may be changed depending on the manner in which the image 72 is observed or evaluation standards, etc.

The comprehensive evaluator 94 calculates an evaluated value of striped irregularities for each of the subareas 74, on the basis of at least one individual evaluated value supplied from the color distribution analyzer 84, the texture analyzer 86, and the pseudo-irregularity evaluator 88. Thereafter, the comprehensive evaluator 94 supplies the evaluated value calculated for each subarea 74 in association with positional information thereof to the particular region extractor 56.

In step S3, the particular region extractor 56 extracts at least one of a region in which robustness against striped irregularities is low and a region in which intensity of the striped irregularities is high (hereinafter collectively referred to as a "particular region 76") from within the image area 70, on the basis of the quantitatively evaluated result acquired in step S2. The particular region extractor 56 extracts a particular region 76 in which the defined subareas 74 serve as units.

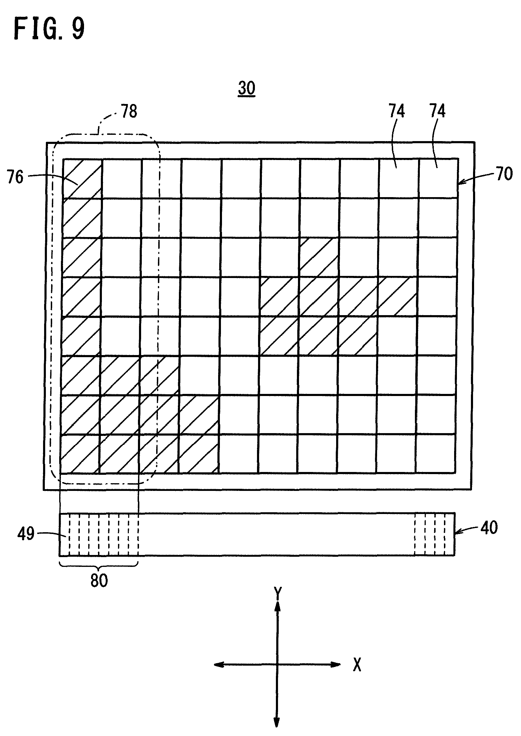

Prior to the extracting process, the allowable range setting unit 64 (see FIG. 23) sets at least one of an allowable range for robustness (a lower limit for robustness) and an allowable range for intensity (an upper limit for intensity) depending on an input action taken through a user interface, for example, and supplies respective values of the allowable range as set data to the particular region extractor 56. Thereafter, the particular region extractor 56 determines whether or not the calculated evaluated values of the subareas 74 fall within the allowable range. As a result, the particular region extractor 56 extracts all subareas 74 that exceed the set allowable range as the particular region 76. In the example shown in FIG. 9, twenty-four subareas 74, which are shown in hatching, are extracted out of eighty subareas 74.

The extracting process is not limited to being based on an absolute evaluation, but may be based on a relative evaluation. On condition that a relative evaluation is used, for example, then the particular region extractor 56 extracts subareas 74, the evaluated values of which are greater or smaller than a predetermined ratio (e.g., an upper ratio of 30 %) as a particular region 76. At this time, the allowable range setting unit 64 (see FIG. 23) may set the ratio at which the subareas 74 are extracted as an allowable range.

In step S4, the chart output data generator 50 determines whether or not a particular region 76 has been extracted in step S3. On condition that at least one particular region 76 has been extracted (step S4: YES), then the control proceeds to the next step (step S5).

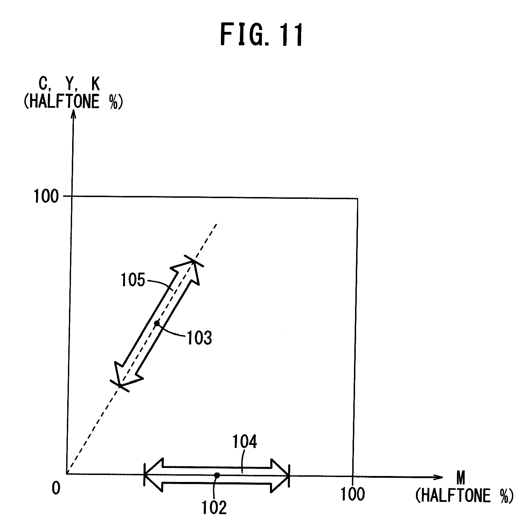

In step S5, on the basis of the color and position of each particular region 76 extracted in step S3, the color patch determiner 58 determines the color combination and layout of one or more color patches 20 on the test chart 22. Prior to determining the color combination and layout, the color patch determiner 58 determines one or more sets of color ranges 104, 105 (see FIG. 11) as correction targets, and a positional range 80 in the direction of the arrow X (hereinafter referred to as a "range set"), on the basis of the color and position of each particular region 76.

The color patch determiner 58 determines the positional range 80 by dividing the entire range of the image area 70 into a plurality of sections in the direction of the arrow X. In the example shown in FIG. 9, the positional range 80 corresponds to a width of two subareas 74 and to a width of eight nozzle columns 49 (see FIG. 2).

Using a statistical procedure, the color patch determiner 58 determines color ranges 104, 105 from the colors of the particular regions 76 belonging to a subarea group 78, for example. The subarea group 78 is a group of subareas 74 (sixteen subareas 74 in the example shown in FIG. 9) associated with the positional range 80. The subareas 74 (the particular regions 76) may be grouped along the direction of the arrow X or along the direction of the arrow Y.

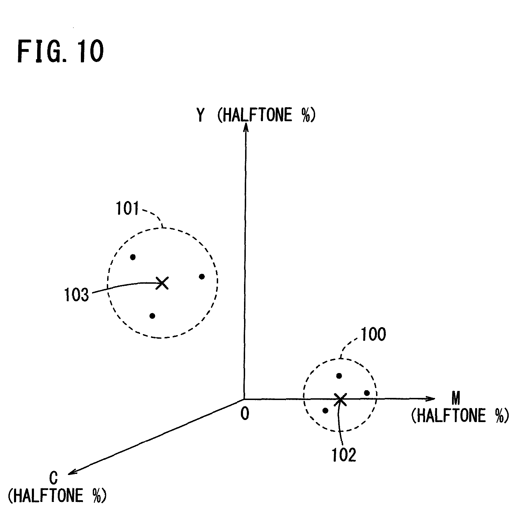

As shown in FIG. 10, the colors of each particular region 76 are plotted in an arbitrary color space (e.g., a CMY color space). In the example shown in FIG. 10, the colors of each particular region 76 are classified into two color groups 100, 101. The color patch determiner 58 calculates one color belonging to the color group 100 as a representative color 102 of the color group 100. Similarly, the color patch determiner 58 calculates one color belonging to the color group 101 as a representative color 103 of the color group 101. Statistical values of the color groups 100, 101, or more specifically, any of an average value, a maximum value, a minimum value, or an intermediate value thereof, may be selected as the representative colors 102, 103.

As shown in FIG. 11, a color range 104 of primary colors around the representative color 102, and a color range 105 of secondary through quaternary colors around the representative color 103 are determined. In other words, the color patch determiner 58 determines the color range 104 including the representative color 102, as well as the color range 105 including the representative color 103.

Then, the color patch determiner 58 determines the layout and color combination of one or more color patches 20 on the test chart 22 so as to fall within the range set. Along with the color patches 20 determined in steps S1 through S5, color patches 20 of predetermined colors may be placed arbitrarily on the test chart 22.

Test images formed on the test chart 22 are not limited to color patches 20, but may be the particular regions 76 themselves that were extracted in step S3. In this case, the color patch determiner 58 clips the particular regions 76 from the image area 70, and determines the layout of the particular regions 76 on the test chart 22.

Thereafter, the chart output data generator 50 generates chart output data 31 based on the color combination and layout of the color patches 20, which were determined by the color patch determiner 58, and supplies the chart output data 31 to the data storage unit 18.

In step S6, the chart output data generator 50 forms and outputs a test chart 22 using the chart output data 31 generated in step S5, and the correction data generator 10 generates a customized table 62 based on the test chart 22. Various known calculating procedures, such as those disclosed in Japanese Laid-Open Patent Publication No. 2012-066457, for example, may be applied as a process for generating such data.

As shown in FIGS. 4 and 23, in a case where a test chart 22 is formed, the head driver 38 is supplied with the ordinary table 60 that is normally used. The ordinary table 60 is composed of standard values (default values), which are essentially uncorrected, for example. Alternatively, in a case where a test chart 22 is formed without the striped irregularities therein being corrected, the striped irregularity correction data 32 need not be supplied to the head driver 38.

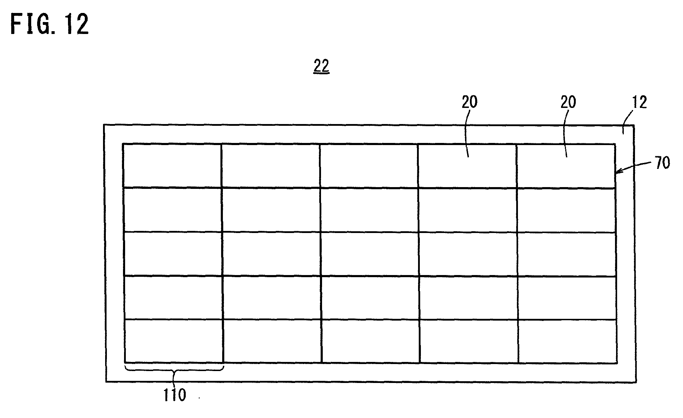

FIG. 12 is a schematic front elevational view of the test chart 22. In the example shown in FIG. 12, the test chart 22 is made up of a total of twenty-five color patches 20 arranged in five rows and five columns on the sheet 12. The horizontal length of a patch column 110 (five color patches 20) corresponds to the positional range 80 shown in FIG. 9.

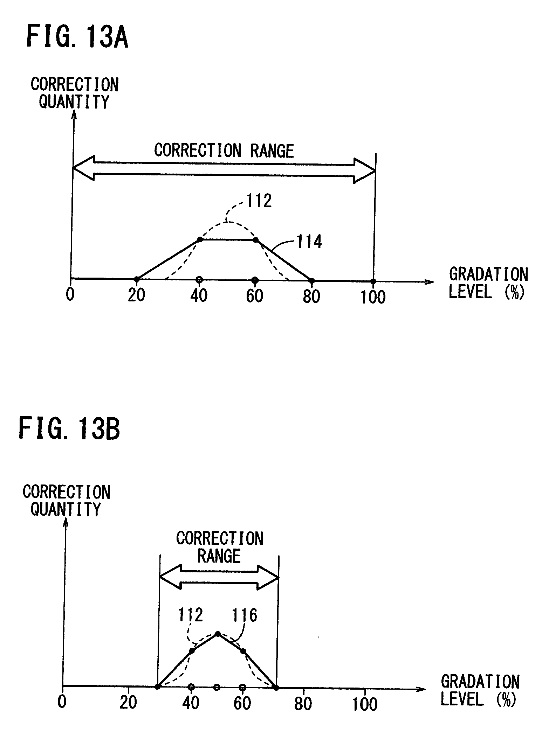

Features of the color combination of each of the color patches 20 that make up the patch column 110 will be described below with reference to FIGS. 13A and 13B. In either one of FIG. 13A or FIG. 13B, the horizontal axis of the graph represents gradation levels (units: %), and the vertical axis of the graph represents correction quantities (arbitrary units). The correction quantities are a variable proportional to a dot gain (or dot density) with zero being a standard value, and are associated with the quantity of liquid droplets 14 that are ejected, and the speed (or halftone %) at which liquid droplets 14 are ejected. The blank circular dots schematically indicate correction quantities "prior to correction", whereas the solid circular dots schematically indicate correction quantities "after correction".

As indicated by the broken-line curves in FIGS. 13A and 13B, an actual correction quantity characteristic curve 112 is non-zero in a gradation level range from 30 % to 70 %, and zero in the remaining gradation level ranges (from 0 % to 30 % and from 70 % to 100 %).

In the example shown in FIG. 13A, color patches 20, the colors of which correspond to the gradation levels of 20 %, 40 %, 60 %, 80 %, and 100 %, are used. In this case, the correction range for striped irregularities covers the full gradation level range from 0 % to 100 %. A solid-line correction quantity characteristic curve 114 is determined by linearly interpolating the dots indicating the correction quantities "after correction". The correction quantity characteristic curve 114 corresponds to the striped irregularity correction data 32 for particular nozzles 42.

As can be understood from FIG. 13A, in the vicinity of the gradation levels of 30 %, 50 %, and 70 %, since a deviation occurs between the correction quantity characteristic curves 112 and 114, correction of the striped irregularities may not be sufficiently effective.

On the other hand, in the example shown in FIG. 13B, color patches 20 the colors of which correspond to the gradation levels of 30 %, 40 %, 50 %, 60 %, and 70 % are used. In this case, the correction range for striped irregularities partially covers a range from 30 % to 70 % of the full gradation level range from 0 % to 100 %. In the same manner as shown in FIG. 13A, a solid-line correction quantity characteristic curve 116 is determined by linearly interpolating the dots indicating the correction quantities "after correction". The correction quantity characteristic curve 116 corresponds to the customized table 62 for particular nozzles 42.

As can be understood from FIG. 13B, the correction quantity characteristic curve 116 approximates the correction quantity characteristic curve 112 highly accurately. As a result, correction of the striped irregularities is sufficiently effective within the full range (0 % to 100 %) including the gradation level range from 30 % to 70 %.

By appropriately setting a correction range for striped irregularities in this manner depending on the striped irregularity characteristics in the image area 70, it is possible to correct striped irregularities that occur in the image area 70 without changing (i.e., increasing) the number of color patches 20.

In step S7, the customized table 62 generated in step S6 is set in association with the input image signal 36. On condition that no particular region 76 has been extracted in step S4 (step S4: NO), then an ordinary table 60 is set instead of the customized table 62 (step S8).

In step S9, the printing job received in step S1 is carried out, and the image 72 is finally output in order to obtain a desired number of prints 30 (see FIGS. 1 and 6). In the image processing routine for final outputting of the image 72, either one of the ordinary table 60 and the customized table 62 is used along with the gradation conversion table 33 (see FIG. 1) in order to perform a striped irregularity correction.

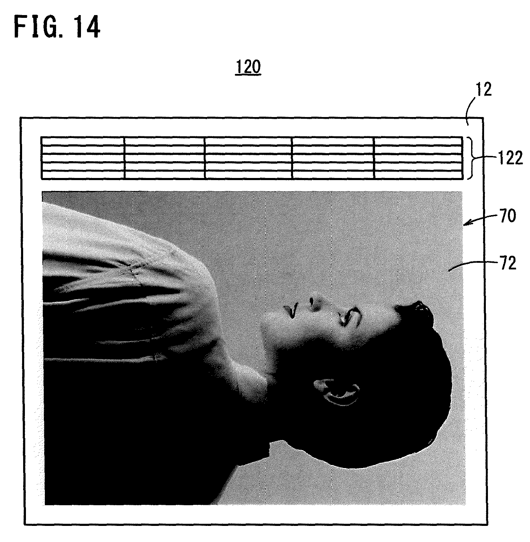

FIG. 14 is a schematic front elevational view of a print 120 in another format. The print 120 includes a group of color patches 20 (hereinafter referred to as a "patch group 122") in addition to the same image 72 in the format of the print 30 (see FIG. 6) on a sheet 12. The patch group 122 is shaped such that the horizontal lengths of the color patches 20 (see FIG. 12) remain unchanged but the vertical lengths thereof are reduced. The color combination of the patch group 122 coincides with the color combination of the test chart 22 (see FIG. 12).

According to one mode of operation, while the prints 30 are successively produced, the prints 120 are produced instead of prints 30 at arbitrary timings (e.g., per every given number of prints). The operator visually checks the image 72 and the patch group 122 on each print 120, and comprehensively judges whether or not the image quality including striped irregularities is acceptable. On condition the operator judges that the striped irregularities are not acceptable, then the operator may perform a correction of the striped irregularities again according to the above process.

Alternatively, on condition that the scanner device 16 is incorporated in the image forming apparatus 200, then an arrangement may be employed for automatically determining whether the striped irregularities are good or bad by colorimetrically measuring and evaluating the patch group 122 on each print 120 while the image 72 is formed.

In step S10, the host apparatus 290 (see FIG. 16, etc.) determines whether or not all of the printing jobs that are presently registered have been carried out. On condition the host apparatus 290 determines that not all of the printing jobs have been completed, then control returns to step S1 and steps S1 through S9 are repeated. On condition the host apparatus 290 determines that all of the printing jobs have been completed, then the image forming apparatus 150 including the chart output data generator 50 completes the sequence of operations with respect to the striped irregularity correction.

### <Arrangement of Image Forming Apparatus 200>

The image forming apparatus 200, which serves as a target to which the image correcting method according to the first embodiment is applied, will be described below. FIG. 15 is a sectional side elevational view showing an arrangement of the image forming apparatus 200.

The image forming apparatus 200 includes a sheet feeding assembly 214 for feeding sheets 12, disposed in an upstream region with respect to the feeding direction along which the sheets 12 (separate sheets of paper in FIG. 15) are fed. The image forming apparatus 200 also includes, downstream of the sheet feeding assembly 214 along the feeding direction of the sheets 12, a processing solution coater 216 for coating the recording surface (hereinafter referred to as an "image forming surface") of a sheet 12 with a processing solution, an image former 218 for applying liquid droplets 14 of inks (see FIG. 1) to the image forming surface to thereby form an image thereon, an ink drier 220 for drying the inks of the processing solution layer on the sheet 12, an image fixer 222 for fixing the image in the processing solution layer to the sheet 12, and a discharger 224 for discharging the sheet 12 with the fixed image thereon.

The sheet feeding assembly 214 includes a sheet stacker 226 for stacking sheets 12, a sheet supplier 228 for supplying one sheet 12 at a time from the sheet stacker 226, and a sheet feeder 230 for feeding the sheet 12 supplied by the sheet supplier 228 to the processing solution coater 216.

The processing solution coater 216 includes a rotatable processing solution coating drum 232, a processing solution coating device 234 for coating the image forming surface of the sheet 12 with the processing solution, and a processing solution drying device 236 for drying the applied processing solution. The processing solution coater 216 applies a coating solution layer in the form of a thin film on the image forming surface of the sheet 12.

A first intermediate feed drum 238 is rotatably disposed between the processing solution coater 216 and the image former 218. The first intermediate feed drum 238 is rotated about its own axis with the sheet 12 held on a circumferential surface thereof, thereby feeding the sheet 12 supplied from the processing solution coater 216 to the image former 218.

The image former 218 has a rotatable image forming drum 240 (feeder) and two head units 242 for ejecting liquid droplets 14 onto the sheet 12 that is fed by the image forming drum 240. Each of the head units 242 includes recording heads 40 (see FIG. 1) in at least basic colors, i.e., Y (yellow), M (magenta), C (cyan), and K (black). The recording heads 40 are arranged along the circumferential direction of the image forming drum 240. The recording heads 40, which are arranged in this manner, successively form images in respective colors on the processing solution layer that is applied to the image forming surface of the sheet 12. The processing solution is effective to coagulate the color materials (pigments) and latex particles that are dispersed in solvents that make up the inks. Therefore, the processing solution is capable of preventing the color materials from flowing on the sheet 12.

A second intermediate feed drum 246 is rotatably disposed between the image former 218 and the ink drier 220. The second intermediate feed drum 246 is rotated about its own axis with the sheet 12 held on a circumferential surface thereof, thereby feeding the sheet 12 supplied from the image former 218 to the ink drier 220.

The ink drier 220 has a rotatable ink drying drum 248, a plurality of hot air nozzles 250 for drying the processing solution layer on the sheet 12, and a plurality of infrared heaters (heaters 252). The ink drier 220 dries the solvent whereas the inks remain in the processing solution layer on the sheet 12.

A third intermediate feed drum 254 is rotatably disposed between the ink drier 220 and the image fixer 222. The third intermediate feed drum 254 is rotated about its own axis with the sheet 12 held on a circumferential surface thereof, thereby feeding the sheet 12 supplied from the ink drier 220 to the image fixer 222.

The image fixer 222 has a rotatable image fixing drum 256, a heating roller 258 disposed close to the surface of the image fixing drum 256, and a fixing roller 260 that is pressed against the surface of the image fixing drum 256. The image fixer 222 heats and presses the latex particles, which are coagulated by the processing solution, thereby melting and fixing the latex particles as an image on the sheet 12.

In a case where the image fixing drum 256 is rotated about its own axis, the sheet 12 with the image fixed to an image forming surface thereof by the above processes is fed into the discharger 224, which is positioned downstream from the image fixer 222.

### <Explanation of Control System of Image Forming Apparatus 200>

FIG. 16 is an electric block diagram showing a system arrangement of the image forming apparatus 200 according to the first embodiment. The image forming apparatus 200 includes, in addition to the scanner device 16, the data storage unit 18 and the head driver 38 (each of which is shown in FIG. 1), the head units 242 and the heaters 252 (each of which is shown in FIG. 15), a communications interface 262, a system controller 264, an image memory 266, a ROM 268, a motor driver 270, a motor 272, a heater driver 274, a print controller 276, an image buffer memory 280, and a ROM 282.

The communications interface 262 is an interface used with the host apparatus 290, which is used by the user to enter instructions into the image forming apparatus 200 for forming an image. The communications interface 262 may comprise a serial interface such as a USB (Universal Serial Bus) terminal, an IEEE 1394 terminal, an Ethernet (registered trademark) terminal, a wireless network terminal, or the like, or a parallel interface such as a Centronics interface or the like. The communications interface 262 may incorporate a buffer memory (not shown) for achieving a higher communications rate.

An image signal supplied from the host apparatus 290 is read through the communications interface 262 into the image forming apparatus 200, whereupon the image signal is temporarily stored in the image memory 266. The image memory 266 is a storage means for storing the image signal (input image signal 36) input through the communications interface 262. Information is read into and out of the image memory 266 through the system controller 264. The image memory 266 may comprise not only a semiconductor memory, but also a magnetic medium such as a hard disk or the like.

The system controller 264, which comprises a central processing unit (CPU) and peripheral circuits, functions as a controller for controlling the image forming apparatus 200 in its entirety according to prescribed programs. The system controller 264 also functions as a processor for performing various processing operations, including operations of the correction data generator 10 (see FIG. 1) and the chart output data generator 50 (see FIG. 4, etc.). More specifically, the system controller 264 controls various components including the communications interface 262, the image memory 266, the motor driver 270, and the heater driver 274, etc. The system controller 264 also controls communications with the host apparatus 290, as well as writing and reading of data into and out of the image memory 266 and the ROM 268. The system controller 264 generates control signals for controlling the motor 272 and the heaters 252 of the sheet delivery system. The system controller 264 sends control signals as well as the input image signal 36 (see FIG. 1) stored in the image memory 266 to the print controller 276.

The ROM 268 stores programs executed by the CPU of the system controller 264 and various data required thereby to carry out various control processes. The image memory 266 is used as a temporary storage area for storing the image signal. The image memory 266 also serves as a storage area for storing programs, and a working area for storing data processed by the CPU.

The motor driver 270 is a driver (drive circuit) for energizing the motor 272 of the sheet delivery system according to commands from the system controller 264. The heater driver 274 is a driver for energizing the heaters 252 according to commands from the system controller 264.

The print controller 276, which comprises a CPU and peripheral circuits, is controlled by the system controller 264 in order to perform various processing and correcting processes, so as to generate liquid droplet ejection control signals from the image signal stored in the image memory 266, and also to supply the generated liquid droplet ejection control data (control signals) to the head driver 38 in order to control the head units 242 to eject liquid droplets.

The print controller 276 is connected to the image buffer memory 280, which temporarily stores the image signal and data representing parameters, etc., in a case where the print controller 276 processes the image signal.

The print controller 276 is connected to the ROM 282, which stores programs executed by the CPU of the print controller 276, along with various data required to carry out various control processes. Although the ROM 282 may be a non-rewritable storage means, preferably, the ROM 282 is a rewritable storage means such as an EEPROM, assuming that the various data stored therein needs to be updated as necessary.

Further, the print controller 276 includes an ink ejection data generating function to generate ink ejection data (control signals for actuators corresponding to the nozzles 42 of the recording heads 40) on the basis of the dot layout data generated by the image processor 34, and a drive waveform generating function.

The ink ejection data, which are generated by the ink ejection data generating function, are supplied to the head driver 38, which controls the head units 242 in order to eject ink droplets. In a case where the head driver 38 controls the head units 242 to eject ink droplets, the head driver 38 refers to the striped irregularity correction data 32 (see FIG. 1), which is stored in the data storage unit 18, for thereby carrying out the striped irregularity correction process described above.

The drive waveform generating function is a function to generate drive signal waveforms for driving the actuators corresponding to the nozzles 42 of the recording heads 40. Signals (drive waveforms), which are generated by the drive waveform generating function, are supplied to the head driver 38.

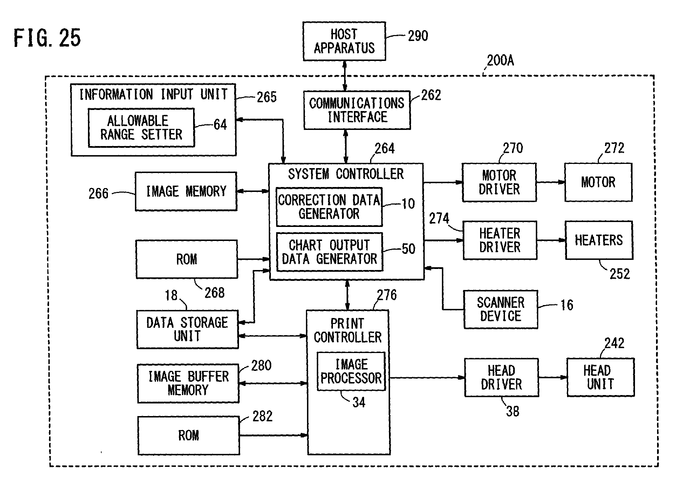

As shown in FIG. 25, in addition to the arrangement of the image forming apparatus 200, an image forming apparatus 200A may be provided that further includes an information input unit 265. The information input unit 265 includes means for entering a manual external operation signal, and means for visually displaying printing conditions or other ancillary information. The information input unit 265 functions as the allowable range setting unit 64 shown in FIG. 23.

### <Advantages of the First Embodiment>

As described above, in a case where the image 72 is formed by a single-pass image forming apparatus 200(A) having the recording heads 40, the test charging forming method according to the first embodiment forms the test chart 22 for correcting striped irregularities in the image area 70, which are caused in a direction (the direction of the arrow Y) perpendicular to the direction (the direction of the arrow X) in which the recording heads 40 extend.

The test charging forming method causes the image forming apparatus 200(A) to carry out a step (step S1) of acquiring an input image signal 36, which is supplied to finally output an image 72 as image data corresponding to the image 72 prior to final outputting of the image 72, a step (step S2) of carrying out an evaluation process on the acquired input image signal 36 for quantitatively evaluating at least one of robustness against striped irregularities and intensity of the striped irregularities, a step (step S3) of extracting at least one of a particular region 76 in which robustness is low and a particular region 76 in which intensity is high from the image area 70 on the basis of the quantitatively evaluated result, and a step (step S5) of determining one or more range sets, which are sets of color ranges 104, 105 to be corrected, and a positional range 80 along the direction x in which the recording heads extend, on the basis of the color and position of each extracted particular region 76, and determining the color combination and layout of one or more test images (color patches 20) on the test chart 22.

Since the color combination and layout of one or more test images on the test chart are determined on the basis of the color and position of at least one of a particular region 76 in which robustness against striped irregularities is low and a particular region 76 in which intensity of the striped irregularities is high, it is possible to form a test chart 22 in which the effectiveness of reduction of striped irregularities in the particular region 76 in the image area 70 is maximized. Consequently, the effectiveness of correction of striped irregularities in which positional reproducibility is high (which are peculiar to a single pass process) is maximized regardless of the color combination of the image 72.

In particular, because the evaluation process is carried out on the input image signal 36 (or a pseudo-image signal) to determine whether or not striped irregularities need to be corrected depending on the extracted result of the particular region 76, it is unnecessary to perform trial outputting. Further, the productivity of the print 30 is increased while the quality of the print 30 is guaranteed.

### <Other Arrangements of the Recording Head 40>

The arrangement of the recording head 40 is not limited to the example shown in FIGS. 2 and 3. For example, the shape of the pressure chamber 43 is not limited to the illustrated example, but may be any of various planar shapes such as a quadrangular shape (a lozenge shape, a rectangular shape, or the like), a pentagonal shape, a hexagonal shape, or other polygonal shapes, a circular shape, an elliptical shape, or the like.

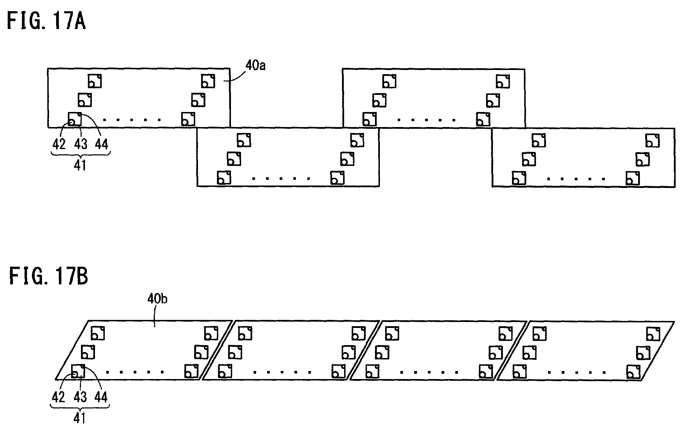

Instead of the arrangement shown in FIG. 2, as shown in FIG. 17A, an elongate line head may be constructed by arraying and joining short head modules 40a, each of which includes a plurality of nozzles 42 arranged in a two-dimensional array, in a staggered pattern. Furthermore, as shown in FIG. 17B, a configuration may be employed in which head modules 40b are arrayed and joined in a row.

Moreover, various types of mechanisms for ejecting liquid droplets 14 may be incorporated in the recording head 40. The recording head 40 may incorporate a mechanism for ejecting liquid droplets 14 by deforming an actuator comprising a piezoelectric device or the like (see FIG. 3), or a thermal jet mechanism, which includes heaters for heating the ink to produce air bubbles therein, and ejecting liquid droplets 14 under the pressure of the air bubbles.

### [Second Embodiment]

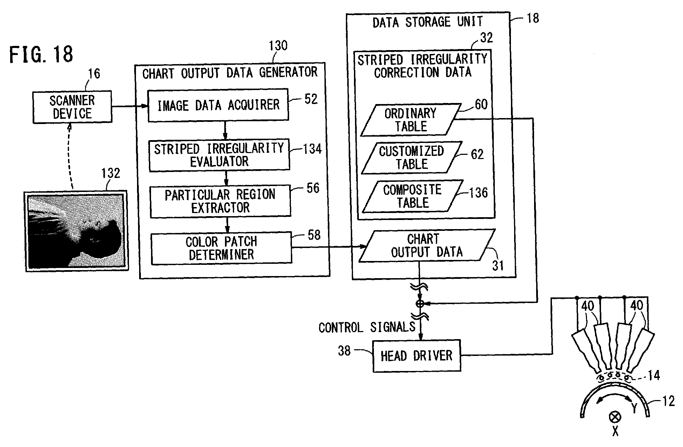

A test chart generating method and an image correction method according to a second embodiment will be described below with reference to FIGS. 18 through 22. Arrangements therein, which are the same as those of the first embodiment, are denoted by identical reference characters, and such features will not be described below.

### <Schematic Block Diagram (Formation of Test Chart 22)>

FIG. 18 is a schematic block diagram of a major arrangement for forming a test chart 22 according to the second embodiment.

A chart output data generator 130 generates chart output data 31 for forming the test chart 22 shown in FIG. 1, on the basis of image data generated by reading an output sample 132. The chart output data generator 130 includes an image data acquirer 52, a striped irregularity evaluator 134, a particular region extractor 56, and a color patch determiner 58.

The chart output data generator 130 is capable of receiving various data from and sending various data to the scanner device 16 and the data storage unit 18. The scanner device 16 reads the output sample 132, which has been obtained by trial outputting, prior to final outputting of an image. The data storage unit 18 stores not only the chart output data 31 (see FIG. 1), but also the striped irregularity correction data 32 (further including a composite table 136). In the same manner as the ordinary table 60 and the customized table 62, the composite table 136 represents table data made up of correction values for correcting the controlled quantity of liquid droplets ejected from each of the nozzles 42.

### <Operations of Chart Output Data Generator 130>

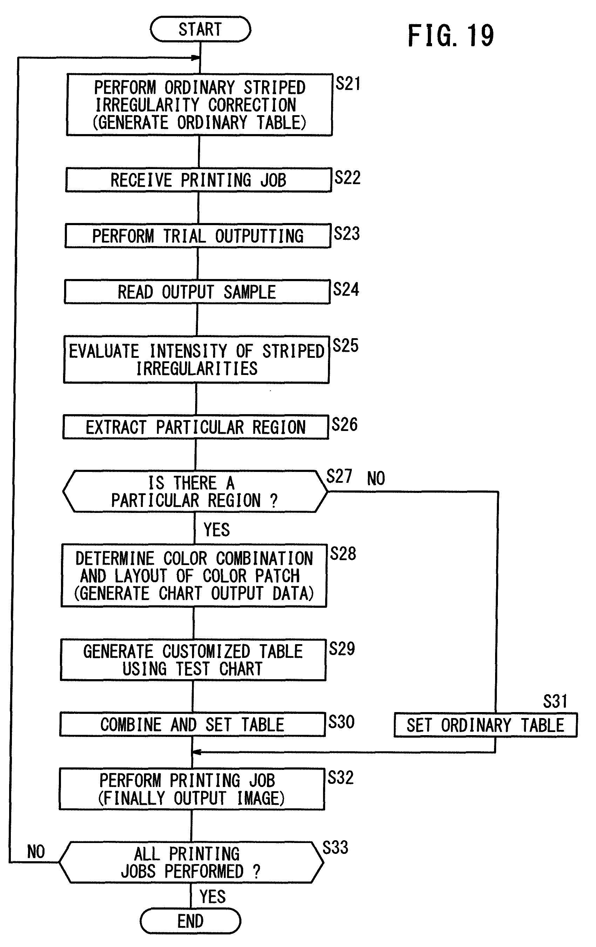

Operations primarily of the chart output data generator 130 (see FIG. 18) will be described in detail with reference to the flowchart shown in FIG. 19 and other figures.

In step S21, an ordinary striped irregularity correction is carried out. The ordinary striped irregularity correction implies a striped irregularity correction using a test chart 22, which includes color patches 20 that cover a relatively wide color range. The correction data generator 10 generates an ordinary table 60 based on the scan data of the test chart 22, and thereafter, stores the generated ordinary table 60 in the data storage unit 18. It is assumed that an ordinary table 60 corresponding to the correction quantity characteristic curve 114 shown in FIG. 13A is generated as a result.

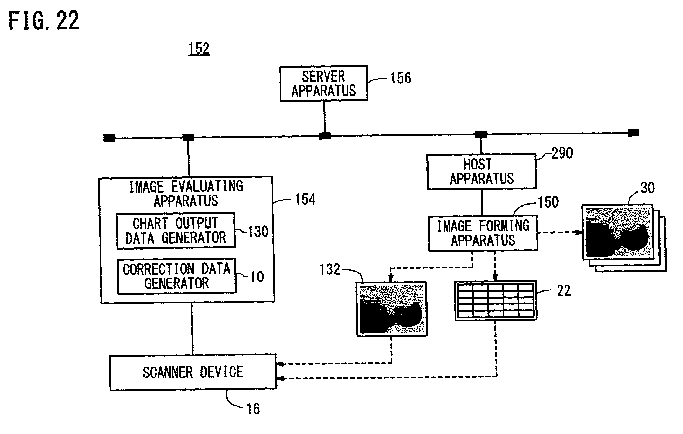

In step S22, a host apparatus 290 (see FIG. 22, etc.) receives a printing job, and supplies various items of information which are used to form the print 30 to the image forming apparatus 150 (see FIG. 22).

In step S23, trial outputting of an image 72 is performed in order to obtain an output sample 132 (see FIG. 6). The term "trial outputting" refers to a process of forming an image 72 prior to final outputting thereof, so as to form a test chart 22 suitable for the color combination of the image 72.

The head driver 38 controls each recording head 40 in order to eject liquid droplets using control signals generated on the basis of the input image signal 36, thereby forming an output sample 132 representing an image, which is the same as or equivalent to the image 72. As shown in FIG. 18, for forming the test chart 22, the head driver 38 is supplied with the ordinary table 60 that covers a relatively wide color range.

In step S24, the image data acquirer 52 reads the output sample 132 formed in step S23 with the scanner device 16, thereby acquiring scan data (image data) corresponding to the image 72.

In step S25, the striped irregularity evaluator 134 performs an evaluation process on the scan data acquired in step S24 in order to quantitatively evaluate the intensity of striped irregularities. In the same manner as the evaluator 92 (see FIGS. 8 and 24) according to the first embodiment, the striped irregularity evaluator 134 may employ any of various known processes as the evaluation process.

In step S26, the particular region extractor 56 extracts a particular region 76 in which the intensity of striped irregularities is high from within the image area 70, on the basis of the quantitatively evaluated result acquired in step S25.

In step S27, the chart output data generator 130 determines whether or not a particular region 76 has been extracted in step S4. On condition that at least one particular region 76 has been extracted (step S27: YES), then control proceeds to the next step (step S28).

In step S28, the color patch determiner 58 determines the color combination and layout of one or more color patches 20 on the test chart 22, on the basis of the color and position of each particular region 76 that was extracted in step S27. This operation is basically the same as the operation performed in step S5 according to the first embodiment, and hence will not be described below. The generated chart output data 31 are stored in the data storage unit 18.

In step S29, a test chart 22 is formed using the chart output data 31 that was generated in step S28, and a customized table 62 is generated. In this step, therefore, a "customized striped irregularity correction" that differs from the above-described ordinary striped irregularity correction is carried out. The phrase "customized striped irregularity correction" implies a striped irregularity correction using a test chart 22 having color patches 20 that cover a relatively narrow color range. The correction data generator 10 generates the customized table 62 based on the scan data of the test chart 22, and thereafter stores the generated customized table 62 in the data storage unit 18.

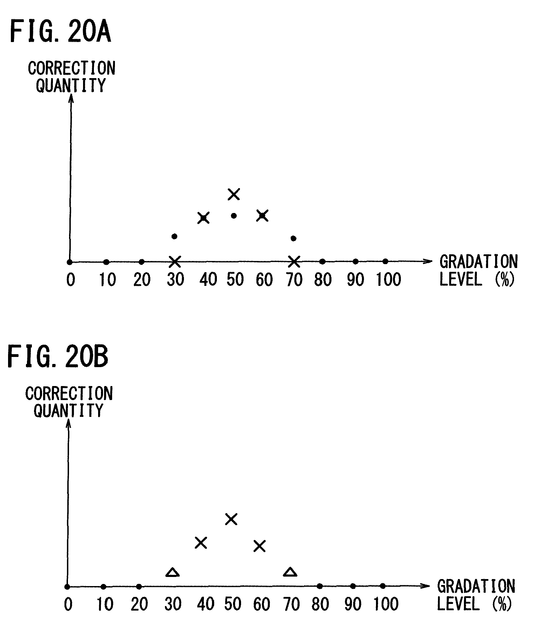

FIG. 20A is a graph showing values of the ordinary table 60 and the customized table 62. The horizontal axis of the graph represents gradation levels (units: %), and the vertical axis of the graph represents correction quantities (arbitrary units). The solid circular dots indicate table values of the ordinary table 60, whereas the x-shaped dots indicate table values of the customized table 62. As has already been described above in relation to the first embodiment, the customized table 62 approximates the actual correction quantity characteristic curve 112 (see FIGS. 13A and 13B) more accurately than the ordinary table 60, within a gradation level range from 30 % to 70 %.

In step S30, the correction data generator 10 combines the ordinary table 60 and the customized table 62 into a composite table 136, as shown in FIG. 20B.

The correction data generator 10 employs the values of the customized table 62 within the color range (30 % to 70 %) covered by the customized table 62. The correction data generator 10 employs the values of the ordinary table 60 within color ranges (0 % to 30 % and 70 % to 100 %) that are not covered by the customized table 62. However, at boundary values (30 %, 70 %), the correction data generator 10 employs average values of the ordinary table 60 and the customized table 62 (refer to the triangular dots).

Thus, by additionally carrying out the "customized striped irregularity correction" depending on the striped irregularity characteristics in the image area 70, it is possible to correct striped irregularities highly accurately within a particular color range while making use of the ordinary table 60, which has already been generated.

The composite table 136 generated in step S30 is set in association with the input image signal 36. On condition that no particular region 76 has been extracted in step S27 (step S27: NO), then an ordinary table 60 is set instead of the composite table 136 (step S31).

In step S32, the printing job, which was received in step S22, is carried out, and the image 72 is finally output in order to obtain a desired number of prints 30 (see FIGS. 1 and 6). In an image processing routine for final outputting of the image 72, either one of the ordinary table 60 and the composite table 136 is used along with the gradation conversion table 33 (see FIG. 1) in order to perform striped irregularity correction.

### <Arrangement of Image Forming Apparatus 150>

The arrangement of the image forming apparatus 150 according to the second embodiment is identical to that shown in the sectional side elevation view of FIG. 15, and will not be described in detail below.

### <Explanation of Control System of Image Forming Apparatus 150>

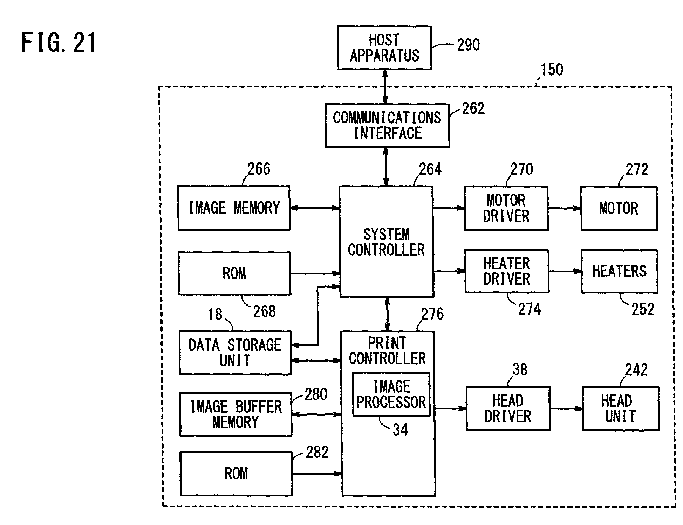

FIG. 21 is an electric block diagram showing a system arrangement of the image forming apparatus 150 according to the second embodiment. The image forming apparatus 150 differs from the first embodiment (image forming apparatus 200), in that the image forming apparatus 150 lacks the scanner device 16, the correction data generator 10, and the chart output data generator 50.

### <Arrangement of Image Forming System 152>

The arrangement of an image forming system 152 in which the image forming apparatus 150 shown in FIGS. 15 and 21 is incorporated will be described below with reference to FIG. 22.

As shown in FIG. 22, the image forming system 152 includes, in addition to the image forming apparatus 150 and the host apparatus 290, an image evaluating apparatus 154, which functions as a test chart forming apparatus, and a server apparatus 156. In the example shown in FIG. 22, the host apparatus 290, the image evaluating apparatus 154, and the server apparatus 156 are connected so as to be capable of communicating with each other.

The image evaluating apparatus 154 comprises a computer having a CPU (Central Processing Unit) and a storage assembly including a hard disk and a memory. The CPU (not shown) reads and executes programs stored in the memory or the like to function as the chart output data generator 130 (see FIG. 18) and the striped irregularity correction data generator 10 (see FIG. 1) described above. The image evaluating apparatus 154 is capable of acquiring the output sample 132 (see FIG. 6) or the test chart 22 (see FIG. 12) through the scanner device 16 which is connected thereto.

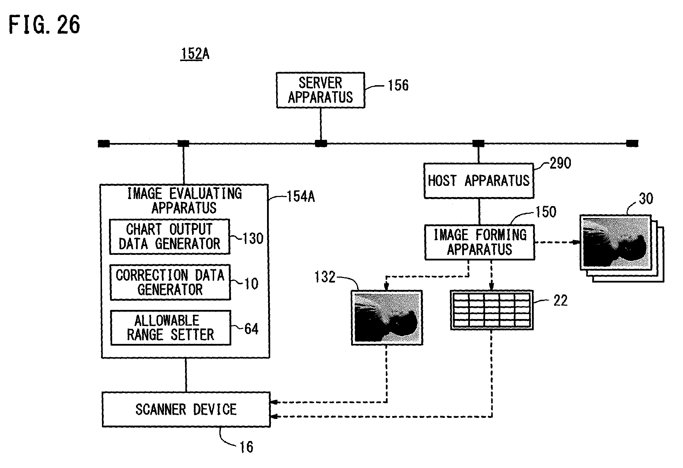

As shown in FIG. 26, an image forming system 152A may include an image evaluating apparatus 154A, which includes another processing function added to the image evaluating apparatus 154. The image evaluating apparatus 154A includes the functions described above, and also functions as the allowable range setting unit 64 shown in FIG. 23.

### [Advantages of the Second Embodiment]

As described above, in a case where the image 72 is to be formed by the single-pass image forming apparatus 150 having the recording heads 40, the test charging forming method according to the second embodiment forms the test chart 22 for correcting striped irregularities in the image area 70, which are caused in the direction (the direction of the arrow Y) perpendicular to the direction (the direction of the arrow X) in which the recording heads 40 extend.

The test charging forming method causes the image evaluating apparatus 154(A) to carry out a step (step S24) of acquiring scan data produced by reading the output sample 132, which is formed by way of trial outputting with the scanner device 16, as image data corresponding to an image 72 prior to final outputting of the image 72, a step (step S25) of carrying out an evaluation process on the acquired scan data for quantitatively evaluating the intensity of striped irregularities, a step (step S26) of extracting at least one particular region 76 where the intensity of striped irregularities is high from the image area 70 on the basis of the quantitatively evaluated result, and a step (step S28) of determining the color combination and layout of one or more color patches 20 on a test chart 22 on the basis of the color and position of each extracted particular region 76.

The above arrangement offers the same advantages as those of the first embodiment. More specifically, the effectiveness of correction of striped irregularities, the positional reproducibility of which is high (i.e., which are peculiar to a single pass process), is maximized regardless of the color combination of the image 72.

### [Supplemental Information]

The present invention is not limited to the above embodiments. Changes can freely be made to the embodiments without departing from the scope of the present invention.

In the above embodiments, only the sheet 12 is fed by rotation of the image forming drum 240. However, at least one of the head units 242 and the sheet 12 may be fed, and the present invention is applicable to arrangements in which both the sheet 12 and the head units 242 are moved relatively to each other. The invention is not limited to the single-pass image forming apparatus 200(A), 150, but also may be applied to a multi-pass image forming apparatus in which the sheet 12 is transversely scanned back and forth to form an image thereon.

In the above embodiments, a piezoelectric mechanism for ejecting liquid droplets 14 by deforming an actuator comprising a piezoelectric element 47 or the like has been illustrated. However, the present invention may also be applied to a thermal jet mechanism, which includes heaters for heating ink to produce air bubbles therein, and ejecting liquid droplets 14 under the pressure of such air bubbles.

In the above embodiments, an ink jet recording process has been illustrated. However, the present invention may be applied to any of various recording processes (e.g., a thermosensitive recording process) that employ recording heads.

In the above embodiments, the present invention is used in graphic art (printing) applications. However, the range to which the present invention is applicable is not limited to such applications. For example, the present invention may be applied to image forming apparatus for forming image patterns, such as wiring (interconnection drawing) apparatus for electronic circuit boards, manufacturing apparatus for manufacturing various devices, resist printing apparatus that make use of a resin liquid as a functional liquid (corresponding to the "liquid droplets 14") to be ejected, and microstructure forming apparatus, etc.

## Claims

1. A method of forming a test chart (22) for correcting a striped irregularity in an image area (70), which is caused in a direction perpendicular to a direction in which a recording head (40) extends, in a case where an image (72) is to be formed using the recording head (40) according to a single-pass process, the method causing a test chart forming apparatus (154, 154A, 200, 200A) to perform:
an acquiring step of acquiring image data corresponding to the image (72) prior to final outputting of the image (72);
an evaluating step of carrying out an evaluation process on the acquired image data for quantitatively evaluating at least one of robustness against the striped irregularity and intensity of the striped irregularity;
an extracting step of extracting at least one of a particular region (76) where the robustness is low and a particular region (76) where the intensity is high from the image area (70) based on the quantitatively evaluated result; and
a determining step of determining a color combination and layout of one or more test images on the test chart (22) based on a color and position of each extracted particular region (76).

2. The method according to claim 1, wherein the extracting step divides the image area (70) into a grid pattern along the direction in which the recording head (40) extends and the direction perpendicular thereto, and extracts the particular region (76) in which defined subareas (74) serve as units.

3. The method according to claim 2, wherein the determining step groups the subareas (74) into groups (78) along at least one of the direction in which the recording head (40) extends and the direction perpendicular thereto, and determines the color combination and layout of the test image for each of the groups (78).

4. The method according to claim 2 or 3, wherein the determining step determines one or more range sets, which are sets of color ranges (104, 105) to be corrected and positional ranges (80) along the direction in which the recording head (40) extends, based on the color and position of each extracted particular region (76), and determines the color combination and layout of one or more color patches (20) as the test image so as to fall within each of the range sets.

5. The method according to claim 4, wherein, on condition that the extracting step extracts two or more subareas (74) belonging to one of the groups (78) as each particular region (76), then the determining step determines the color ranges (104, 105) including representative colors (102, 103) in each particular region (76), and determines the color combination and layout of each color patch (20).

6. The method according to any one of claims 1 through 3, wherein the determining step clips each particular region (76) from the image area (70) and determines the layout of the one or more particular regions (76) as the test image.

7. The method according to any one of claims 1 through 6, wherein the acquiring step acquires an image signal (36) to be supplied for final outputting of the image (72) as the image data; and
the evaluating step evaluates the robustness based on at least one of a color distribution on the image represented by the image signal, a texture distribution on the image (72) represented by the image signal (36), and head information concerning the recording state of the recording head (40).

8. The method according to any one of claims 1 through 6, wherein the acquiring step acquires an image signal (36) to be supplied for final outputting of the image (72) as the image data; and
the evaluating step generates a pseudo-image signal representing the image (72) to which the striped irregularity is applied in a pseudo fashion from the acquired image signal (36), using head information concerning the recording state of the recording head (40), and carries out the evaluation process on the pseudo-image signal in order to evaluate at least one of the robustness and the intensity.

9. The method according to claim 7 or 8, wherein the evaluating step determines a target area to be quantitatively evaluated from the image area (70) based on at least the head information, and evaluates only the target area.

10. The method according to any one of claims 1 through 6, wherein the acquiring step acquires scan data produced by reading, with a scanner device (16), an output sample (132) formed by trial outputting of the image signal (36) to be supplied for final outputting thereof as the image data; and
the evaluating step performs the evaluation process on the scan data in order to evaluate the intensity.

11. The method according to any one of claims 1 through 10, further causing the test chart forming apparatus (154, 154A, 200, 200A) to perform:
a setting step of setting an allowable range for at least one of the robustness and the intensity;
wherein the extracting step extracts a particular region (76) that exceeds the allowable range which has been set.

12. The method according to any one of claims 1 through 11, wherein the evaluating step performs the evaluation process based on human standard visual response characteristics in order to evaluate at least one of the robustness and the intensity.

13. An image correcting method causing the test chart forming apparatus (154, 154A, 200, 200A) to further perform:
an output step of forming the test chart (22) using the method according to any one of claims 1 through 12, and outputting the test chart (22) on a recording medium (12); and
a generating step of generating striped irregularity correction data (32) for correcting the striped irregularity that is produced in a case where the image (72) is formed, based on a color distribution of the one or more test images output on the recording medium (12).

14. The image correcting method according to claim 13, wherein the acquiring step, the evaluating step, and the extracting step are performed, and it is determined whether or not the output step needs to be performed depending on the extracted result of the particular region (76).

15. A test chart (22) which is formed using the method according to any one of claims 1 through 12.

16. An apparatus (154, 154A, 200, 200A) for forming a test chart (22) for correcting a striped irregularity in an image area (70), which is caused in a direction perpendicular to the direction in which a recording head (40) extends, in a case where an image (72) is to be formed using the recording head (40) according to a single-pass process, comprising:
an image data acquirer (52) configured to acquire image data corresponding to the image (72) prior to final outputting of the image (72);
a striped irregularity evaluator (54) configured to carry out an evaluation process on the image data acquired by the image data acquirer (52) for quantitatively evaluating at least one of robustness against the striped irregularity and intensity of the striped irregularity;
a particular region extractor (56) configured to extract at least one of a particular region (76) where the robustness is low and a particular region (76) where the intensity is high from the image area (70) based on the quantitatively evaluated result from the striped irregularity evaluator (54); and
a test image determiner (58) configured to determine a color combination and layout of one or more test images on the test chart (22) based on a color and position of each particular region (76) extracted by the particular region extractor (56).

17. A test chart forming program for forming a test chart (22) for correcting a striped irregularity in an image area (70), which are caused in a direction perpendicular to a direction in which a recording head (40) extends, in a case where an image (72) is to be formed using the recording head (40) according to a single-pass process, the program causing a test chart forming apparatus (154, 154A, 200, 200A) to perform:
an acquiring step of acquiring image data corresponding to the image (72) prior to final outputting of the image (72);
an evaluating step of carrying out an evaluation process on the acquired image data for quantitatively evaluating at least one of robustness against the striped irregularity and intensity of the striped irregularity;
an extracting step of extracting at least one of a particular region (76) where the robustness is low and a particular region (76) where the intensity is high from the image area (70) based on the quantitatively evaluated result; and
a determining step of determining a color combination and layout of one or more test images on the test chart (22) based on a color and position of each extracted particular region (76).
